Europäisches Patentamt

European Patent Office

Office européen des brevets

(11) Numéro de publication: **0 086 499**
**B1**

(12) **FASCICULE DE BREVET EUROPEEN**

(45) Date de publication du fascicule du brevet:
**14.08.85**

(21) Numéro de dépôt: **83101506.0**

(22) Date de dépôt: **17.02.83**

(51) Int. Cl.⁴: **A 21 C 11/12**

(54) **Appareil pour décorer les produits de pâtisserie et de boulangerie.**

(30) Priorité: **17.02.82  FR 8202598**

(43) Date de publication de la demande:
**24.08.83 Bulletin 83/34**

(45) Mention de la délivrance du brevet:
**14.08.85 Bulletin 85/33**

(84) Etats contractants désignés:
**BE CH DE LI SE**

(56) Documents cités:
**DE - C - 35 911**
**GB - A - 852 009**

(73) Titulaire: **FRISCO-FINDUS AG, CH-9400 Rorschach (CH)**

(72) Inventeur: **Launay, Noel, 15, rue Bossuet,**
**F-60 000 Beauvais (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention concerne un appareil pour décorer les produits de pâtisserie et de boulangerie.

On connaît des dispositifs réalisant l'entaillage de produits boulangers de manière à faciliter le développement de la pâte à la cuisson tout en leur imprimant un motif décoratif.

Le brevet DE-C-35911 décrit un outil manuel constitué d'un poinçon mobile muni d'arêtes tranchantes guidé dans un bâti fixe qui, par un mouvement combiné de translation descendante et de rotation sur lui-même, entaille un pâton disposé à poste fixe tout en le décorant.

Le brevet GB-A-852009 concerne un dispositif mécanique d'entaillage de pâtons défilant sur une bande transporteuse horizontale, permettant de découper la partie supérieure des pâtons à intervalles réguliers selon un tracé rectiligne par l'intermédiaire de deux disques accolés l'un à l'autre tournant en sens contraire et portant des lames régulièrement espacées à leur périphérie qui travaillent à la manière de ciseaux.

On sait que pour un développement correct de la pâte lors de la cuisson de certains produits de boulangerie et de pâtisserie, notamment des pâtons et des gâteaux fourrés, en particulier ceux du type croustades ou pithiviers, il est nécessaire de pratiquer des entailles ou découpes dans l'abaisse de pâte sans toutefois traverser totalement celle-ci. On profite alors de cette nécessité pour donner à ces découpes ou entailles un aspect décoratif.

Or, la présente invention vise précisément un appareil simple permettant d'obtenir industriellement ce résultat. Celui-ci comporte au moins un outil tranchant servant à attaquer la pâte, disposée à poste fixe dans l'appareil, et un équipement mobile portant cet outil. Il est caractérisé en ce que le mouvement de cet équipement mobile est tel que l'outil tranchant 9 réalise sur la pâte un ou plusieurs tracés répétitifs identiques mais régulièrement décalés les uns par rapport aux autres, l'équipement mobile porte-outil tranchant étant constitué d'au moins un satellite, qui tourne autour d'une pièce fixe formant planétaire, ce satellite tournant portant ledit outil de façon décalée par rapport à son axe de rotation, l'outil tournant ainsi autour de cet axe et étant, en outre, grâce à un système à came animé d'un mouvement ascendant-descendant pour, à chaque fois, attaquer la pâte à des intervalles réguliers après l'achèvement dudit tracé.

Suivant d'autres caractéristiques:

— l'outil tranchant décrit des courbes du genre cycloïde, par exemple des épi- ou hypocycloïdes d'un diamètre tel que le tracé recoupe l'axe du train planétaire;

— le mouvement ascendant-descendant est obtenu au moyen d'une came de relevage, montée sur l'équipement mobile porte-outil tranchant et agissant directement sur ce dernier;

— l'outil tranchant est incliné par rapport à la verticale;

— un ressort agit sur ledit outil tranchant pour assurer la profondeur de coupe.

D'autres caractéristiques et avantages de l'invention ressortiront plus clairement de la description qui va suivre faite en regard des dessins annexés donnés à titre d'exemple et sur lesquels:

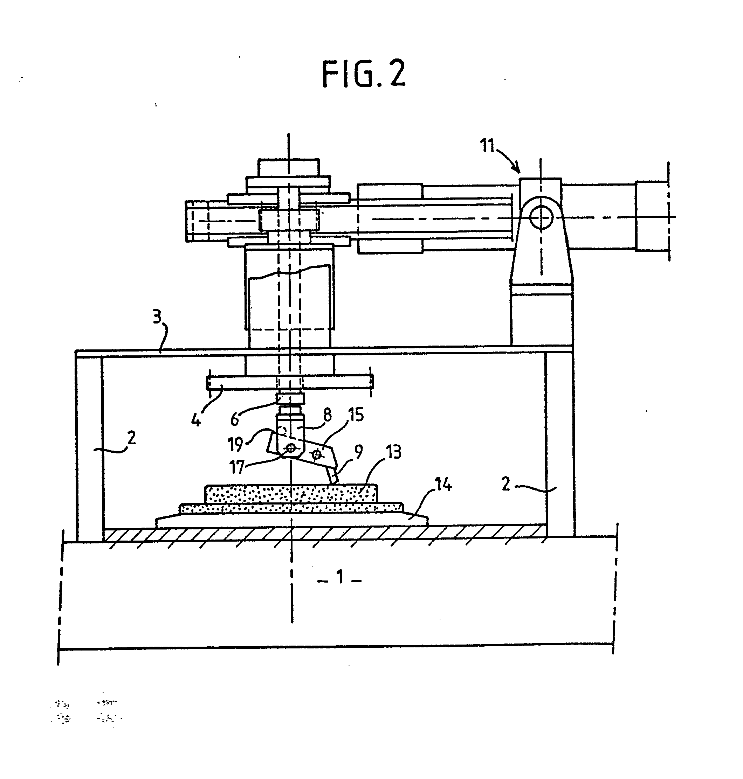

— les fig. 1 et 2 sont deux vues en élévation de l'appareil selon l'invention,

— la fig. 3 est une vue schématique illustrant l'équipement mobile porte-outil,

— et la fig. 4 est une vue en plan d'un tracé régulier en forme de «soleil» tel qu'obtenu avec l'appareil.

En se référant à ces dessins, l'appareil selon l'invention est essentiellement constitué d'un bâti comportant un socle 1 sur lequel reposent quatre colonnes telles que 2 supportant à leur extrémité supérieure une plaque 3 sur laquelle sont montés les différents éléments essentiels constitutifs de cet appareil, à savoir: une plaque circulaire fixe 4, traversée par un arbre 5 portant un bras 6, lui-même traversé par un arbre portant à l'une de ses extrémités une roue 7 prenant appui sur la périphérie de la plaque 4 et à son autre extrémité un bras 8 portant un outil tranchant 9 monté basculant et enfin une came 10 pour assurer le relevage à intervalles réguliers de l'outil tranchant comme décrit ci-après.

On se sert de l'appareil de la façon suivante:

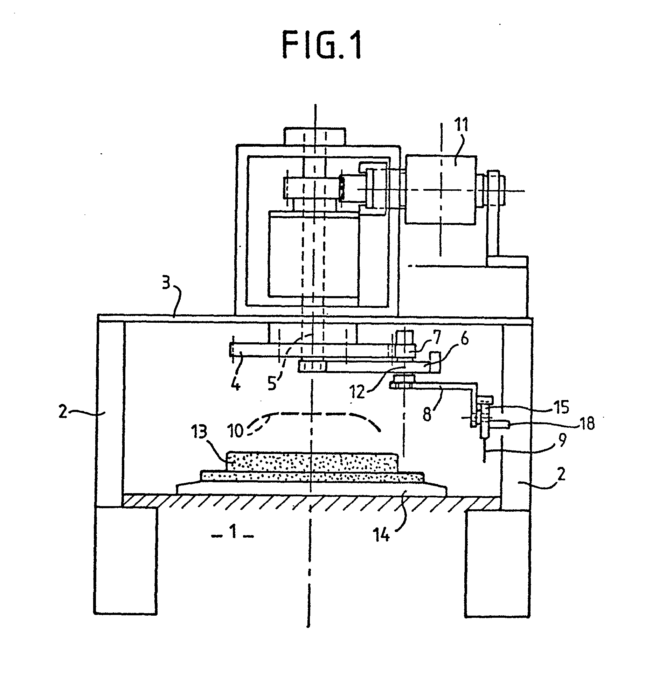

En agissant par un moyen quelconque soit manuellement soit par l'intermédiaire d'un moteur tel que représenté à la fig. 1 sous référence 11, de manière à provoquer la rotation de l'arbre 5, on entraîne le bras 6 calé sur ledit arbre 5, par exemple dans le sens de la flèche $f_1$. Le mouvement de ce bras se traduit par la rotation de la roue 7 qui prend appui sur la tranche de la plaque fixe 4. Bien entendu, cette roue 7 peut être une roue dentée venant en prise sur un engrenage correspondant réalisé sur la tranche de la plaque, ou bien cette roue 7 peut être réalisée en tout matériau approprié doué d'un coefficient de frottement suffisant pour rouler sans glisser sur la tranche de la plaque 4. En variante, non représentée, la roue 7 peut prendre appui sur la tranche intérieure circulaire d'une plaque 4 par exemple en forme de couronne, la roue tournant alors dans le sens inverse de la flèche $f_2$ et l'outil décrivant des tronçons d'hypocycloïdes.

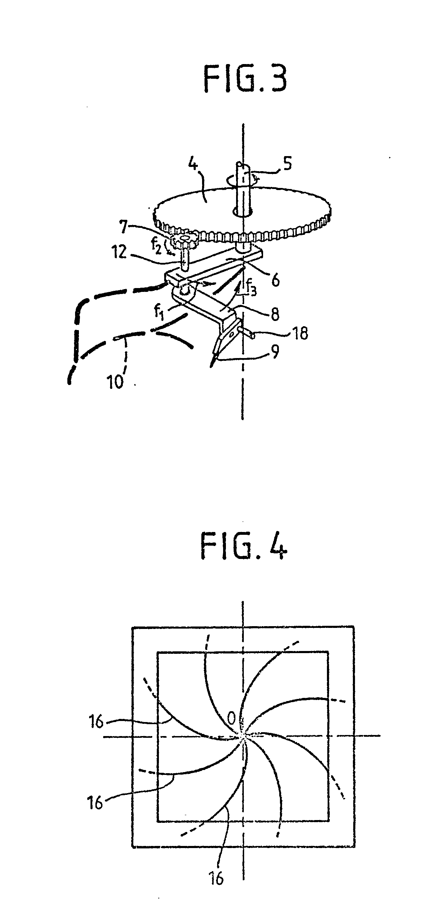

Dans la forme d'exécution représentée, cette roue 7, entraînée par le bras 6 par l'intermédiaire de l'arbre 12, tourne dans le sens de la flèche $f_2$. Elle est appelée à parcourir toute la circonférence de la plaque 4. Cette rotation se traduit par la rotation correspondante du dispositif porte-couteau, à savoir du bras 8 dans le sens de la flèche $f_3$. En supposant que le couteau 9 soit en position basse, c'est-à-dire en position de travail, exerçant un effet de coupe sur la pâte du produit de pâtisserie ou de boulangerie 13 porté par un plateau 14 reposant sur le socle 1 sur lequel repose l'ensemble de l'appareil, ce couteau décrit une portion d'épicycloïde (par exemple telle que 16, illustrée sur la fig. 4) constituant un des éléments du tracé général du motif décoratif désiré. Suivant l'angle de décalage existant entre le dispositif porte-outil tranchant et la came 10, ledit couteau 9 continuera à exercer son action sur la pâte jusqu'au moment où la pièce 15 (articulée en 17 sur le bras 8) viendra au contact du début de la came 10 par l'intermédiaire du doigt 18. Sous l'effet de cette came, la pièce 15 se trouve être soulevée. Le couteau 9 se soulève également et cesse d'effectuer tout tracé sur la pâte 13.

Du fait que le mouvement de rotation du bras 8 dans le sens de la flèche $f_3$ se poursuit, la pièce 15 continue son mouvement en prenant appui sur toute l'étendue de la came 10. Arrivée en fin de parcours, elle se trouve à nouveau libérée et retombe librement pour mettre à son tour l'outil tranchant 9 au contact de la pâte 13 pour réaliser un nouveau tracé tel que 16 en partant du centre 0 du produit à décorer.

La succession des mouvements qui viennent d'être décrits se traduit par une succession d'autant de portions d'épicycloïdes 16 jusqu'au moment où la roue 7 ayant parcouru la circonférence du plateau 4 se retrouve à son point de départ.

On réalise ainsi un motif décoratif affectant la forme d'un soleil comme représenté à la fig. 4, étant bien entendu que ce motif peut affecter toute autre forme suivant les diamètres respectifs des éléments animés d'un mouvement relatif les uns par rapport aux autres. De façon générale, ce motif résulte de la répétition d'un tracé identique à lui-même se répétant à intervalles réguliers, fonction de la longueur de la came 10.

De façon avantageuse, le couteau 9 est monté sur son bras 15 en prévoyant un ressort intermédiaire de tension réglable (non représenté) qui coopère avec une butée 19, permettant de régler la profondeur de coupe dans la masse de la pâte à décorer.

Pour faciliter et favoriser un meilleur développement de la pâte au cours de la cuisson, le couteau sera monté de façon à attaquer celle-ci sous un angle différent d'un angle d'attaque orthogonal en particulier dans le cas des pâtes de pâtisserie dites «pâtes feuilletées». La tension du ressort sera en outre réglée de telle manière que cette pâte ne soit pas totalement coupée sur toute son épaisseur de façon à permettre le développement de la pâte feuilletée lors de la cuisson tout en maintenant l'étanchéité du pâton vis-à-vis des jus de cuisson d'une farce qu'il contient.

## Revendications

1. Appareil pour décorer les produits de pâtisserie et de boulangerie, comportant au moins un outil tranchant (9) servant à attaquer la pâte (13), disposée à poste fixe dans l'appareil, et un équipement mobile portant cet outil (9), caractérisé en ce que le mouvement de cet équipement mobile est tel que l'outil tranchant (9) réalise sur la pâte un ou plusieurs tracés répétitifs identiques mais régulièrement décalés les uns par rapport aux autres, l'équipement mobile porte-outil tranchant étant constitué d'au moins un satellite (7), qui tourne autour d'une pièce fixe (4) formant planétaire, ce satellite tournant (7) portant ledit outil (9) de façon décalée par rapport à son axe de rotation, l'outil tournant ainsi autour de cet axe et étant, en outre, grâce à un système à came (10, 18), animé d'un mouvement ascendant-descendant pour, à chaque fois, attaquer la pâte à des intervalles réguliers après l'achèvement dudit tracé.

2. Appareil selon la revendication 1, caractérisé par le fait que l'outil tranchant (9) décrit des épicycloïdes d'un diamètre tel que le tracé recoupe l'axe du train planétaire.

3. Appareil selon l'une des revendications 1 ou 2, caractérisé par le fait que le mouvement ascendant-descendant est obtenu au moyen d'un doigt (18) monté sur l'équipement mobile porte-outil tranchant et agissant directement sur ce dernier en glissant ou en roulant sur des cames fixes (10).

4. Appareil selon l'une quelconque des revendications 1 à 3, caractérisé par le fait que l'outil tranchant (9) est incliné par rapport à la verticale.

5. Appareil selon l'une quelconque des revendications 1 à 4, caractérisé par le fait que l'outil tranchant (9) est monté basculant sur un bras (8) solidaire du satellite et qu'un ressort agit sur l'outil tranchant (9) en coopération avec une butée (19) pour assurer la profondeur de coupe.

## Claims

1. An apparatus for decorating confectionery and bakery products, comprising at least one cutting tool (9) which acts on the pastry (13) which is placed in a fixed position in the apparatus and a mobile assembly which bears said tool (9), characterized in that the movement of said mobile assembly is such that the cutting tool (9) performs on the pastry one or more repetitive tracings which are identical, but are regularly displaced with respect to one another, the mobile cutting tool holder assembly comprising at least one planet wheel (7) rotating around a stationary part (4) in planetary manner, said rotating planet wheel (7) supporting said tool (9) in a displaced manner with respect to its rotation axis, said tool rotating around said axis and being further subjected by a cam system (10, 18) to an ascending-descending movement in order to, each time, act on the pastry at regular intervals after the completion of said tracing.

2. An apparatus according to claim 1, characterized in that the cutting tool (9) describes epicycloids of a diameter such that the tracing intersects the centre of the planetary train.

3. An apparatus according to one of claims 1 or 2, characterized in that the ascending-descending movement is obtained by a finger (18) which is mounted on the mobile cutting tool holder assembly and which directly acts on the latter by sliding or rolling on fixed cams (10).

4. An apparatus according to any one of claims 1 to 3, characterized in that the cutting tool (9) is inclined with respect to the vertical.

5. An apparatus according to any one of claims 1 to 4, characterized in that the cutting tool (9) is mounted so that it rocks on an arm (8) integral with the planet wheel, and that a spring acts on the cutting tool (9) in cooperation with a stop (19) to ensure the depth of cut.

## Patentansprüche

1. Gerät zum Verzieren von Konditoreiprodukten und Backwaren, mit mindestens einem Schneidwerkzeug (9) zum Schneiden des Teigs (13), der stationär in dem Gerät angeordnet ist, und einer beweglichen Vorrichtung, die das Werkzeug (9) trägt, dadurch gekennzeichnet, dass die Bewegung der beweglichen Vorrichtung derart ist, dass das Schneidwerkzeug (9) auf dem Teig eine oder mehrere Linien ausführt, die sich identisch wiederholen, aber bezüglich einander regelmässig versetzt sind, wobei die das Schneidwerkzeug tragende bewegliche Vorrichtung durch mindestens ein Planetenrad (7) gebildet wird, das sich um ein das Zentralrad bildendes festes Teil (4) dreht, wobei das sich drehende Planetenrad (7) das Werkzeug (9) versetzt in bezug auf seine Drehachse trägt, wobei das Werkzeug sich somit um diese Achse dreht und ausserdem aufgrund einer Nokkenanordnung (10, 18) eine Aufwärts- und Abwärtsbewegung erhält, um jedes Mal den Teig in regelmässigen Abständen nach Fertigstellung der besagten Linie zu schneiden.

2. Gerät nach Anspruch 1, dadurch gekennzeichnet, dass das Schneidwerkzeug (9) Epizykloiden mit einem derartigen Durchmesser beschreibt, dass die Linie die Achse des Planetengetriebes wieder schneidet.

3. Gerät nach einem der Ansprüche 1 oder 2, dadurch gekennzeichnet, dass die Aufwärts- und Abwärtsbewegung mittels eines Fingers (18) erhalten wird, der auf der das Schneidwerkzeug tragenden beweglichen Vorrichtung angebracht ist und direkt auf dieses einwirkt, indem er über feste Nocken (10) gleitet oder rollt.

4. Gerät nach einem der Ansprüche 1 bis 3, dadurch gekennzeichnet, dass das Schneidwerkzeug (9) gegenüber der Vertikalen geneigt ist.

5. Gerät nach einem der Ansprüche 1 bis 4, dadurch gekennzeichnet, dass das Schneidwerkzeug (9) schwenkbar an einem mit dem Planetenrad (7) fest verbundenen Arm (8) angebracht ist und dass eine Feder zusammen mit einem Anschlag (19) auf das Schneidwerkzeug (9) einwirkt, um die Tiefe des Schnitts zu sichern.

# FIG.1

# FIG.2

## FIG.3

## FIG.4